# EUROPÄISCHE PATENTSCHRIFT

(11) **EP 1 168 953 B1**
(45) Veröffentlichungstag und Bekanntmachung des Hinweises auf die Patenterteilung: **26.03.2003**
(21) Anmeldenummer: 00920690.5
(22) Anmeldetag: 12.04.2000
(51) Int. Cl.: A47J 37/12, A47J 27/00

(54) **GERÄT ZUR AUTOMATISCHEN ESSENSZUBEREITUNG**
DEVICE FOR AUTOMATICALLY PREPARING FOOD
APPAREIL POUR LA PREPARATION AUTOMATIQUE D'UN METS

(30) Priorität: 14.04.1999 DE 19916863; 14.04.1999 DE 19916862; 14.04.1999 DE 19916904
(43) Veröffentlichungstag der Anmeldung: 09.01.2002
(73) Patentinhaber: Spasovski, Marjan, 45136 Essen (DE)
(72) Erfinder: Spasovski, Marjan, 45136 Essen (DE)
(74) Vertreter: von Kirschbaum, Alexander, Dipl.-Ing.
(86) Internationale Anmeldenummer: EP0003255
(87) Internationale Veröffentlichungsnummer: WO00062655

(56) Entgegenhaltungen:
- EP-A- 0 313 037
- US-A- 3 448 677
- US-A- 4 762 056
- US-A- 5 073 393
- US-A- 5 537 915

## Beschreibung

Die Erfindung betrifft ein Gerät zur automatischen Essenszubereitung. Es handelt sich insbesondere um ein Küchengerät, das im Haushalt eingesetzt werden kann.

Es sind Haushaltsgeräte wie Mikrowellen u.dgl. bekannt, mit denen fertige Speisen erwärmt werden können. Mit derartigen Geräten ist es jedoch nicht möglich, eine Speise aus frischen Zutaten automatisch zuzubereiten. Zur Zubereitung von Speisen aus mehreren frischen Zutaten ist stets eine Person erforderlich, die die Zutaten beispielsweise mischt, je nach Garzeit unterschiedlich lang kocht u.dgl.

Aufgabe der Erfindung ist es, ein Gerät zur automatischen Essenszubereitung zu schaffen, mit dem auch eine Essenszubereitung aus mehreren unterschiedlichen Zutaten möglich ist.

Die Lösung der Aufgabe erfolgt erfindungsgemäß durch die Merkmale des Patentanspruchs 1.

Das erfindungsgemäße Gerät zur automatischen Essenszubereitung weist eine Erwärmungsplatte zum Erwärmen eines Topfes auf. Erfindungsgemäß ist über der Erwärmungsplatte eine Kammer zur Aufnahme einer austauschbaren Kassette angeordnet. In der Kassette sind Zutaten für die Essenszubereitung enthalten. In der Kassette ist eine Öffnung zum Entladen der Zutaten in den Topf vorgesehen, die mit einem Verschluß verschlossen ist. Der Verschluß wird erfindungsgemäß von einer an der Kammer vorgesehenen Antriebseinheit betätigt. Bei der Antriebseinheit handelt es sich vorzugsweise um eine elektrische Antriebseinheit, so dass das Öffnen der Kassette automatisch erfolgen kann. Zur Zubereitung einer Speise muß somit lediglich die austauschbare Kassette in das Gerät eingeführt und die Essenszubereitung gestartet werden. Nach dem Start der Essenszubereitung wird die Öffnung der Kassette zu einem vorgegebenen Zeitpunkt automatisch durch die Antriebseinheit geöffnet. Die Öffnung erfolgt beispielsweise, nachdem der Topf auf eine vorbestimmte Temperatur erwärmt wurde. Da es sich bei der Kassette um eine austauschbare Kassette handelt, können auf einfache Weise unterschiedliche Speisen zubereitet werden, indem eine mit den Zutaten für die entsprechende Speise befüllte Kassette in das Gerät eingeführt wird. Die Kassetten können beispielsweise als befüllte Einwegkassetten gekauft werden.

Vorzugsweise weist die Antriebseinheit mindestens ein Aufreißorgan auf, durch das eine die Kassette verschließende Folie aufreißbar ist. Dies hat den Vorteil, dass die Kassette einfach ausgebildet sein kann und lediglich durch eine Folie verschlossen ist. Dies ist insbesondere bei der Verwendung von Einwegkassette vorteilhaft.

Vorzugsweise weist der Kammerboden eine mit einem Verschluß versehene Öffnung auf. Der Verschluß ist ebenfalls durch die Antriebseinheit betätigbar. An dem Verschluß kann ein Öffner, beispielsweise ein Aufreißorgan, zum Öffnen des Verschlusses der Folie der Kassette vorgesehen sein. Der in dem Kammerboden angeordnete Verschluß hat die Funktion, die Kammer zu verschließen und zusätzlich beim Betätigen des Verschlusses die Kassette zu öffnen. Durch Vorsehen eines Kammerverschlusses ist es möglich, die Kammer als Kühlkammer auszubilden. In der Kühlkammer kann somit eine Kassette mit verderblichen Zutaten untergebracht werden.

Die Antriebseinheit weist vorzugsweise eine Achse auf, die mit dem in dem Kammerboden vorgesehenen Verschluß verbindbar ist. Durch Drehen oder Verschieben der Achse wird der Verschluß betätigt und damit der Kammerboden geöffnet. Insbesondere wenn die Kammer als Kühlkammer ausgebildet ist, ist die Antriebseinheit über der Kühlkammer angeordnet. Um ein ungehindertes Herausnehmen und Einführen der Kassette in die Kammer zu ermöglichen, ist die Achse der Antriebseinheit verschiebbar. Zum Betätigen des Kammerverschlusses wird die Achse durch die Kammer geschoben und greift in den Kammerverschluß ein. Durch das Anordnen der Antriebseinheit über der Kammer kann die Kammer direkt über dem Topf angeordnet werden.

Um die Zubereitung von Speisen zu ermöglichen, bei denen unterschiedliche Zutaten beispielsweise zu unterschiedlichen Zeitpunkten dem Topf zugeführt werden müssen, oder wenn unterschiedliche Zutaten nicht in einem gemeinsamen Fach aufbewahrt werden können, weist die Kassette vorzugsweise mehrere Fächer für unterschiedliche Zutaten auf. Die Kassette ist so ausgebildet, dass die einzelnen Fächer mittels einer Verstellvorrichtung automatisch über der in dem Kammerboden vorgesehenen Öffnung angeordnet werden können. Dies kann beispielsweise durch automatisches Verschieben der Kassette erfolgen. Vorzugsweise weist die Kassette einen kreiszylindrischen Querschnitt auf. Die Fächer haben sodann einen kreis- und/oder kreissegmentförmigen Querschnitt. Das Anordnen der einzelnen Fächer der Kassette über der Öffnung in dem Kammerboden erfolgt durch Drehen der Kassette.

Anstelle des Aufreißens einer die Kassette verschließenden Folie kann das erfindungsgemäße Kochgerät auch einen automatisch betätigbaren Stößel aufweisen. Mit Hilfe des Stößels wird der Verschluß der Kassette durchstoßen. Vorzugsweise erfolgt das Durchstoßen des Verschlusses von oben, so dass der Stößel zuerst einen Deckel des entsprechenden Fachs und sodann einen Bodenbereich desselben Fachs durchstößt. Vorzugsweise wird ein Teil der in der Kassette vorgesehenen Fächer durch einen Stößel und ein Teil der Fächer mit Hilfe der in dem Kammerboden-Verschluß vorgesehenen Öffner geöffnet.

Zum Mischen der in den Topf eingebrachten Speisen kann ferner in dem Topf ein Rührwerk vorgesehen sein. Das Rührwerk ist über eine Betriebsachse mit einer Antriebseinheit verbindbar. Durch die Antriebseinheit kann das Rührwerk in unterschiedlichen Drehrichtungen sowie in unterschiedlichen Geschwindigkeiten bewegt werden. Die Antriebseinheit ist vorzugsweise oberhalb der Kammer angeordnet, um die Kammer unmittelbar über dem Topf vorsehen zu können. Die Betriebsachse ist zum Anschluß an das Rührwerk durch die Kammer verschiebbar. Es handelt sich bei der Betriebsachse beispielsweise um eine teleskopartig verschiebbare Achse. Um die Betriebsachse durch die Kammer und die in der Kammer befindliche Kassette hindurchschieben zu können, weist die Kassette eine entsprechende Ausnehmung auf.

Der Topf ist vorzugsweise mit einem Deckel verschlossen, der eine einer in dem Kühlkammerboden vorgesehenen Öffnung gegenüberliegende Öffnung aufweist. Somit werden aus der Kassette die Zutaten durch die Öffnung im Kammerboden und anschließend durch die Öffnung im Deckel in den Topf eingebracht.

Vorzugsweise ist die Öffnung in dem Topfdeckel durch einen am Rührwerk vorgesehenen Ansatz verschließbar. Das Verschließen des Topfdeckels erfolgt hierbei dadurch, dass das Rührwerk in eine Stellung gedreht wird, in der der Ansatz unmittelbar unterhalb der Deckelöffnung angeordnet ist. Um ein dichtes Verschließen der Deckelöffnung zu ermöglichen, kann das Rührwerk angehoben werden, so dass der Ansatz an der Deckelinnenseite anliegt. Es ist hierdurch möglich, in dem Topf Zutaten auch bei Überdruck zu garen.

Vorzugsweise weist das Gerät einen Ständer auf, der die Kammer trägt. An dem Ständer sind ebenfalls die unterschiedlichen Antriebseinheiten befestigt und ggf. auch die Erwärmungsplatte angeordnet. Vorzugsweise weist der Ständer zusätzlich einen Dunstabführkanal auf. Durch den Dunstabführkanal wird aus der Deckelöffnung austretender Dunst abgeführt. Mit dem Dunstabführkanal kann ein Dunstfilter oder ein Dunstabzug verbunden sein. Der bei der Essenszubereitung entstehende Dunst gelangt somit nicht in den Raum. Um ein Austreten von Dunst in den Raum zu vermeiden, kann zusätzlich an dem Topfdeckel und/oder dem Kammerboden mindestens ein Dunstlenkblech vorgesehen sein. Das Dunstlenkblech lenkt den aus dem Topf austretenden Dunst in Richtung des Dunstabführkanals.

Ferner kann an dem Ständer ein Wasseranschluß zum Zuführen von Wasser in den Topf über die Deckelöffnung vorgesehen sein. Hierbei können die Dunstlenkbleche dazu dienen, dass das Wasser in die Deckelöffnung geleitet wird. Ferner kann der Ständer einen Wasserablauf aufweisen. Der Wasserablauf dient zum Abführen von Reinigungswasser. Zum Reinigen wird über den Wasseranschluß Wasser in den Bereich zwischen der Deckelöffnung und dem Kammerboden geleitet. Bei geschlossener Deckelöffnung kann das Wasser nicht in den Topf eindringen, sondern dient ausschließlich zur Reinigung des Kammerbodens und des Verschlusses des Topfdeckels. Nach dem Reinigen läuft das Reinigungswasser automatisch über einen Wasserablauf ab. Die Dunstlenkbleche können hierbei wiederum dazu diesen, dass das Wasser nicht aus dem Gerät austritt.

Das erfindungsgemäße Kochgerät kann ferner mit einem in den Topf einsetzbaren Fleischrost zum Braten von Fleisch oder anderen Speisen versehen sein. Bei dem Fleischrost handelt es sich um eine selbständige Erfindung. Der Fleischrost weist einen Rostboden auf, der durch im wesentlichen senkrecht zum Rostboden angeordnete Stege in mehrere Abschnitte unterteilt ist. Ferner ist ein Fleischwender vorgesehen. Hierzu ist ein entsprechend ausgebildetes Rührwerk mit im wesentlichen vertikalen Schenkeln vorgesehen. Durch Drehen des Fleischwenders wird das Fleisch von den Schenkeln des Fleischwenders gegen die Stege des Rostbodens gedrückt. Hierdurch wird die eine Seite des Fleisches angehoben und umgeklappt, so dass es in den angrenzenden Bereich gewendet wird. Es handelt sich somit bei dem Fleischrost mit Fleischwender um eine automatische Vorrichtung zum Wenden von Fleisch oder anderen zu bratenden Speisen.

Um das Fleisch nach dem Braten von der Erwärmungsplatte zu entfernen, weist der Fleischwender Ansätze auf. Die Ansätze greifen in Ausnehmungen des Fleischrostes ein. Zum Anheben des Fleischrostes weist dieser Führungselemente, die mit an der Topfinnenwand vorgesehenen Führungselementen zusammenwirken. Durch das Drehen des Fleischrostes wird dieser entlang der Führungselemente angehoben. Vorzugsweise sind die Schienenenden als Auflagen ausgebildet, auf denen ein Auflageelement zum Halten des Fleischrosts in gehobener Lage aufliegt.

Bei gehobenem Fleischrost ist es möglich, in dem Topf eine Bratensoße oder eine andere Speise zuzubereiten. Hierzu sind in dem Rostboden Ausnehmungen vorgesehen, durch die die Schenkel des Fleischwenders in den unteren Topfbereich verschiebbar sind. Durch Rotation des Fleischwenders, der sodann als Rührwerk dient, können im unteren Topfbereich Speisen gemischt werden. Die Speisenzubereitung im unteren Topfbereich kann durch Zufuhr von in der Kassette vorgesehenen Zutaten, wie vorstehend beschrieben, durchgeführt werden.

Die Kassette zur Bereitstellung von Zutaten für vorstehend beschriebenes Kochgerät weist mehrere Fächer für unterschiedliche Zutaten auf. Die Fachböden der einzelnen Fächer sind mit einer Folie verschlossen. Vorzugsweise handelt es sich um einen im Querschnitt kreiszylinderförmigen Körper mit kreis- und/oder ringsegmentförmigen Fächern. Vorzugsweise sind die Folien, mit denen die einzelnen Fächer verschlossen sind, mit einem Ansatz versehen. An dem Ansatz greift der Öffner des Kammerboden-Verschlusses zum Öffnen des entsprechenden Faches an. Hierdurch ist das Öffnen der einzelnen Fächer vereinfacht. Vorzugsweise ist zumindest einem Fach der Kassette eine Ausnehmung zugeordnet, in der die Folie beim Öffnen des Fachs aufgenommen wird. Die Folie wird somit beim Öffnen des Fachs in die Ausnehmung geschoben. Hierdurch ist verhindert, dass eine bereits geöffnete Folie das Drehen oder Verschieben der Kassette beeinträchtigt.

Zum Drehen einer kreiszylinderförmigen Kassette ist vorzugsweise an der Kassette ein Antriebsmittel, insbesondere ein umlaufender Zahnkranz, vorgesehen. In den umlaufenden Zahnkranz kann zum Drehen der Kassette, so dass das nächste Kassettenfach über der Kammerboden-Öffnung liegt, eine mit einem Zahnrad versehene Antriebseinheit eingreifen. Ebenso kann das Drehen der Kassette über ein an der Kassettenaußenwand anliegendes Rad erfolgen. Hierbei erfolgt die Drehung aufgrund von Reibung. Die genaue Lage der Kassette kann durch Markierungen an der Kassette und einen entsprechenden Sensor wahrgenommen werden.

Zur Steuerung des erfindungsgemäßen Kochgeräts ist ein Mikroprozessor vorgesehen. Mit Hilfe des Mikroprozessors können beispielsweise Zeiten gesteuert werden, zu denen bestimmte Fächer der Kassette geöffnet werden. Ebenso können von dem Mikroprozessor Rührzeiten, Rührgeschwindigkeit, Kochzeiten, Temperatur der Erwärmungsplatte, Zufuhr, Zeitpunkt und Zufuhrmenge von Wasser in den Topf u.dgl. gesteuert werden.

Nachfolgend wird die Erfindung anhand bevorzugter Ausführungsformen unter Bezugnahme auf die anliegenden Zeichnungen näher erläutert. Es zeigen:
- Fig. 1: eine schematische perspektivische Ansicht des Geräts,
- Fig. 2: einen schematischen Querschnitt durch das Gerät,

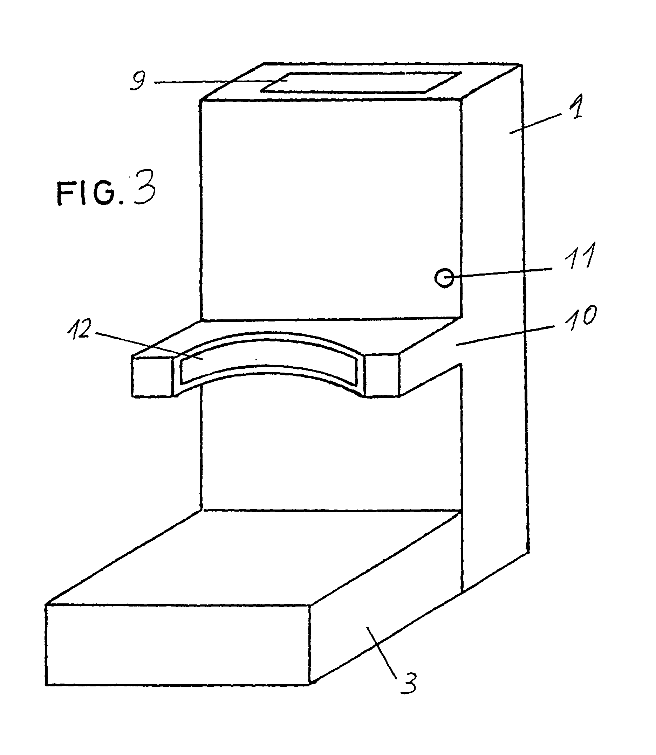

- Fig. 3: eine schematisch perspektivische Ansicht des Ständers des Geräts mit Erwärmungsplatte,
- Fig. 4: den Kühlkammerboden,
- Fig. 5: den in dem Kühlkammerboden vorgesehenen Verschluß,
- Fig. 6: eine schematische Vorderansicht des Kühlkammerbodens,
- Fig. 7: eine schematische perspektivische Ansicht des Topfdeckels,
- Fig. 8: eine erste Ausführungsform des Rührwerks,
- Fig. 9: eine schematisch Explosionszeichnung der Kassette,
- Fig. 10: einen schematischen Querschnitt der Kassette,
- Fig. 11: einen schematischen Querschnitt eines Kassettenfachs,
- Fig. 12: einen schematischen Querschnitt des Topfs,
- Fig. 13a: eine schematische perspektivische Ansicht des Fleischrosts,
- Fig. 13b: eine vergrößerte Ansicht eines Segments des Rostbodens,
- Fign. 14 a-c: eine schematische Draufsicht und Seitenansichten des Fleischwenders,
- Fig. 15: ein in den Topf einsetzbares Sieb und
- Fig. 16: ein mit dem Sieb zusammenwirkendes Rührwerk.

Das Kochgerät weist einen Ständer 1 auf, der eine Kiste 2 trägt. In der Kiste 2 ist die Kühlkammer 4 sowie eine Betriebskammer 5 vorgesehen. Ferner trägt die Kiste 2 den zur Steuerung des Geräts vorgesehenen Mikroprozessor 7. Unter der Kühlkammer 4 ist der Topf 42 angeordnet, der auf einer Erwärmungsplatte 3 steht. Zum Zubereiten einer Speise wird in die Kühlkammer 4 eine Kassette 48 eingeführt. Hierzu weist die Kiste eine Klappe 6 mit Handgriff 26 auf. Anschließend wird an einem Bedienfeld des Mikroprozessors 7 die Art der Speise eingegeben, so dass der Mikroprozessor 7 das entsprechende Programm zur Zubereitung der Speise abarbeitet.

In dem Topf 42 ist ein Rührwerk 44 zum Mischen der aus der Kassette 48 dem Topf 42 zugeführten Speisen vorgesehen. Das Rührwerk 44 ist über eine mit einer Antriebseinheit versehenen Betriebsachse 17 drehbar. Die Betriebsachse 17 ist eine teleskopartig ausgebildete Achse, die in der Betriebskammer 5 angeordnet ist. Zum Anschließen der Betriebsachse 17 an das Rührwerk 44 wird die Betriebsachse 17 verschoben, d.h. teleskopartig ausgezogen. Dies erfolgt automatisch.

Zum Zuführen von länglichen Teigwaren wie Spaghetti o.dgl. ist ein Behälter 21 in der Betriebskammer 5 angeordnet. Der Behälter 21 ist durch einen Deckel 8 mit Handgriff 20 verschlossen. Die Teigwaren können bereits vor der Speisenzubereitung in dem Behälter 21 gelagert werden. Zum Zuführen der Teigwaren aus dem Behälter 21 in den Topf 42 wird ein in einer Zwischenwand zwischen der Kühlkammer 4 und der Betriebskammer 5 vorgesehenen Deckel geöffnet. Der Deckel ist über einen Elektromotor 19 betätigbar. Beim Zuführen der Teigwaren ist entweder keine Kassette 48 in der Kühlkammer 4 enthalten oder die Kassette 48 weist eine Durchgangsöffnung auf, die mit dem Behälter 21 fluchtet, so dass die Teigwaren aus dem Behälter 21 in den Topf 42 fallen.

In dem Ständer 1 ist ein Kühlmotor 15 angeordnet, der über Kühlschläuche mit der Kühlkammer 4 verbunden ist. Ferner ist in dem Ständer 1 ein Dunstabführkanal 9 vorgesehen, durch den der aus dem Topf 42 austretende Dunst abgeführt werden kann. Hierzu kann in dem Dunstabführkanal beispielsweise eine Saugeinrichtung, wie ein Ventilator, vorgesehen sein. Der Dunstabzugskanal 9 kann mit einem Dunstabzug verbunden werden, so dass in dem Raum, in dem sich das Gerät befindet, keine Gerüche entstehen.

Der Ständer 1 weist ferner einen Wasserzuführanschluß 13 auf. Der Wasserzuführanschluß 13 kann direkt an die Wasserleitung angeschlossen werden. Über den Wasserzuführanschluß 13 kann Wasser durch den unteren Bereich des Dunstabzugskanals 9 in Richtung des Topfs 42 geleitet werden. Ferner ist ein Wasserablauf 14 in dem Ständer vorgesehen. Durch diesen kann überschüssiges Wasser oder Reinigungswasser abgeführt werden.

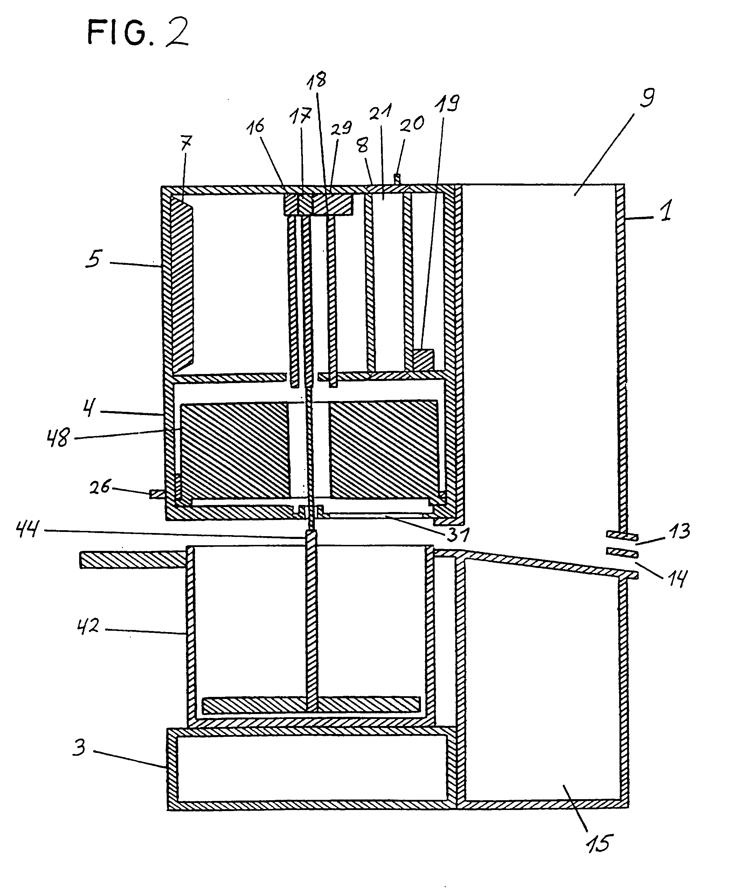

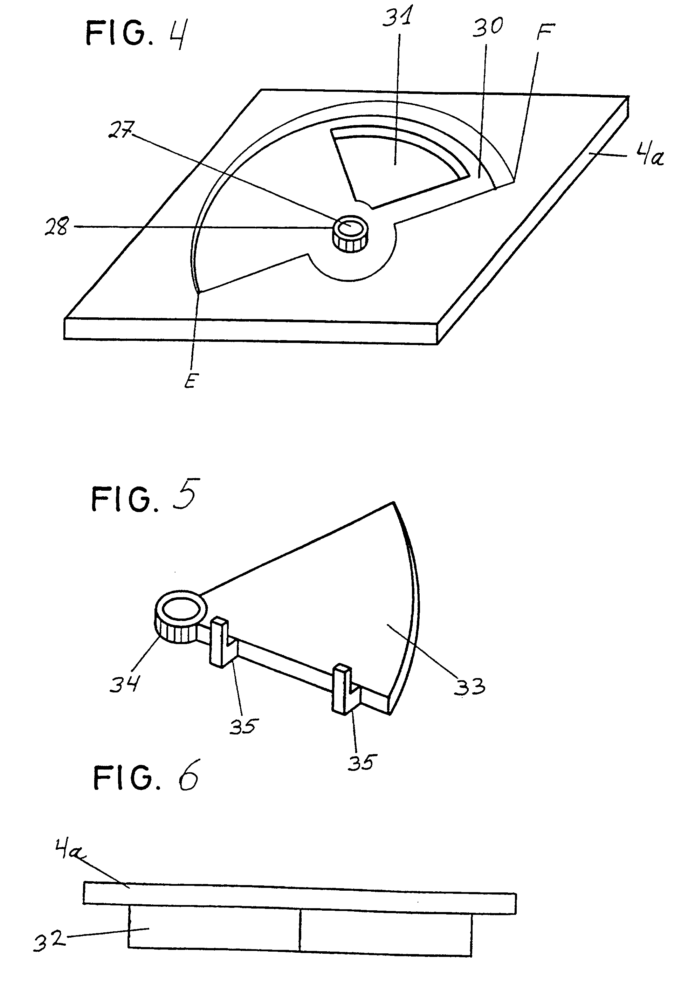

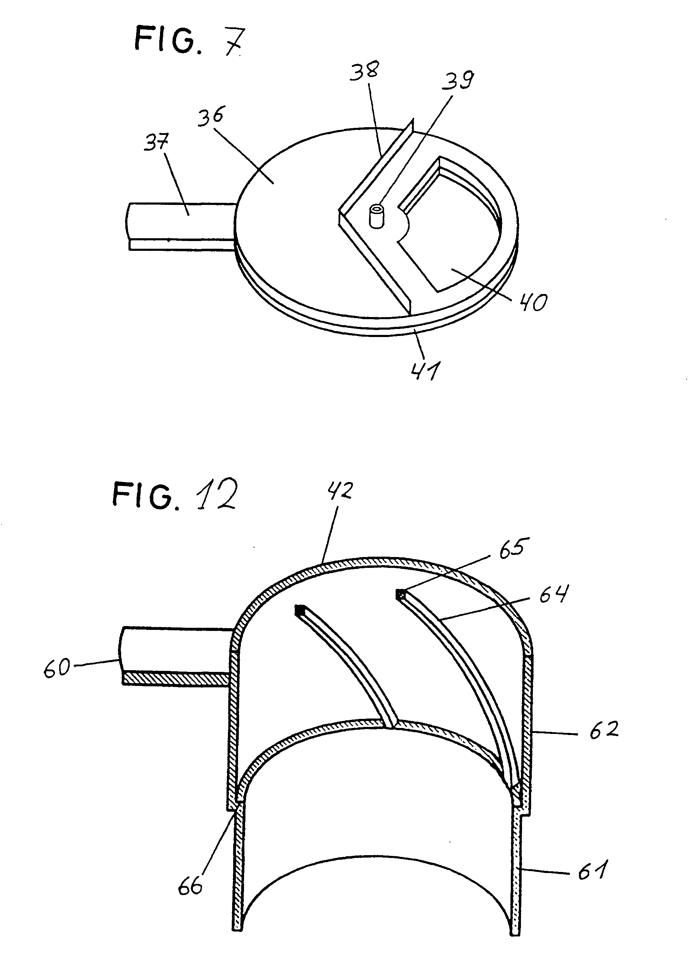

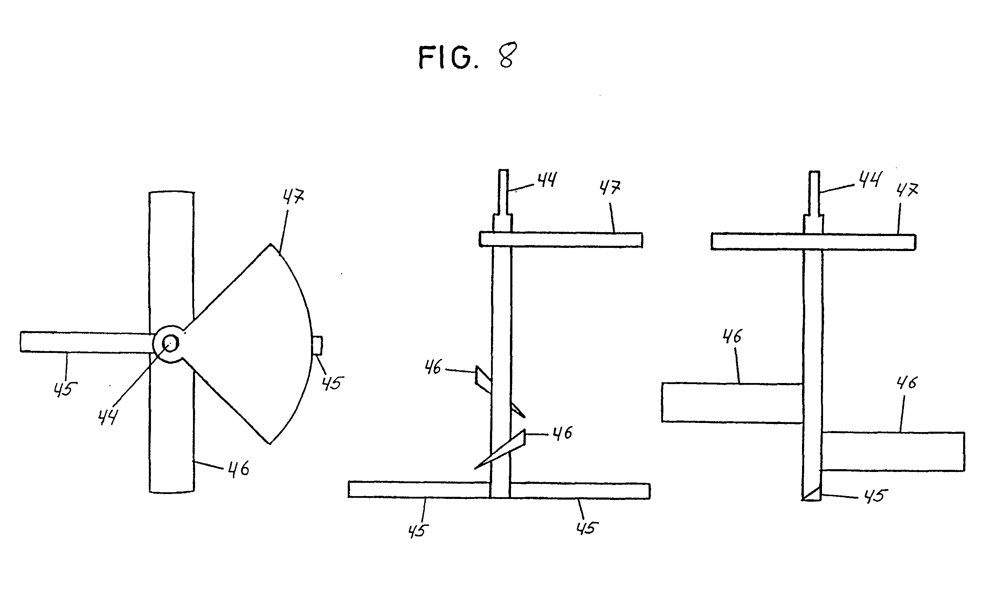

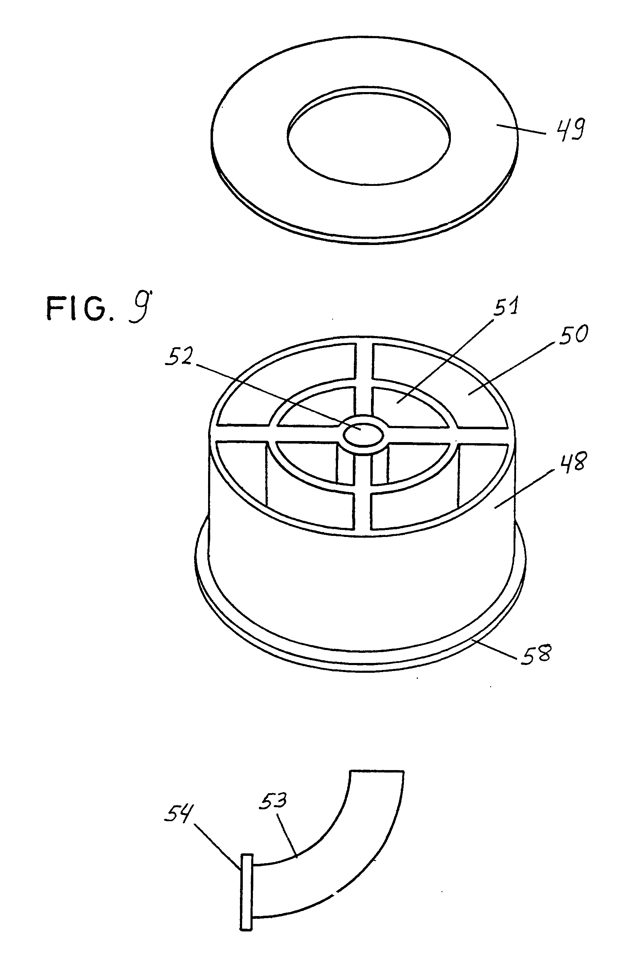

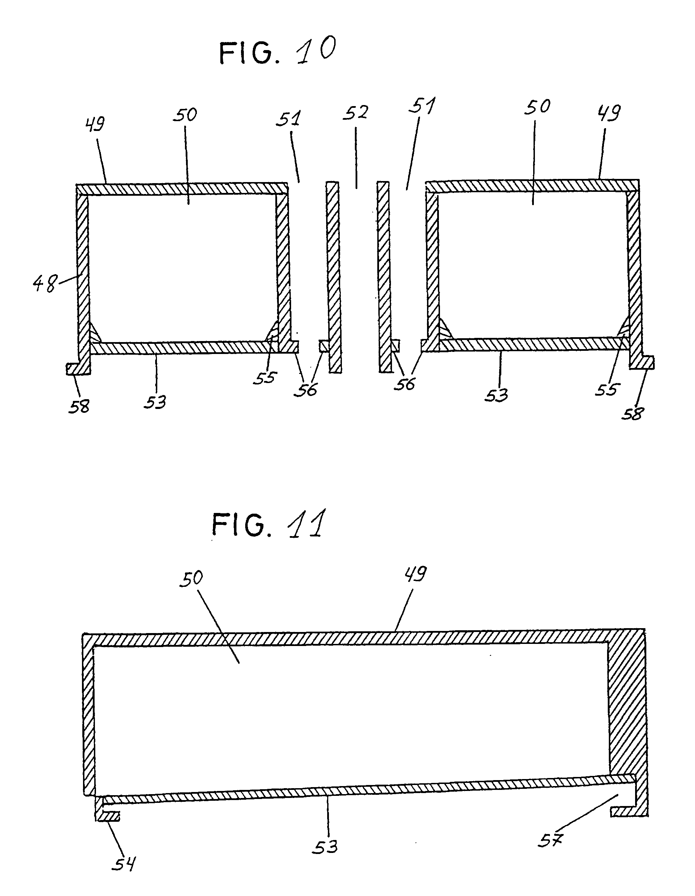

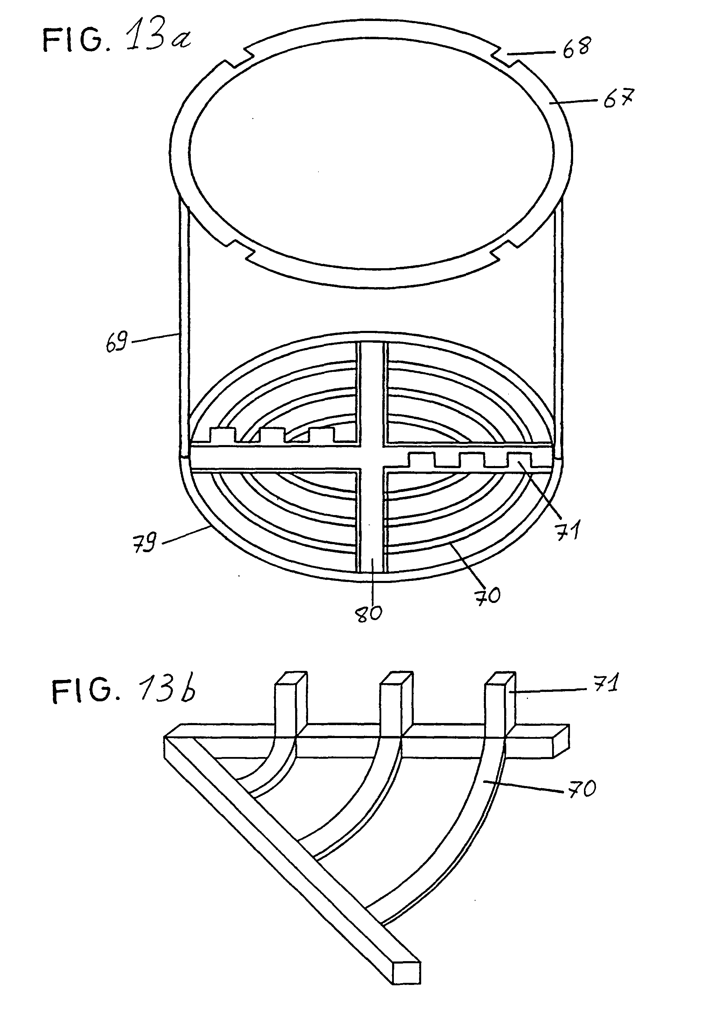

Der Kühlkammerboden 4a (Fig. 4) weist eine halbkreisförmige Vertiefung 30 auf. In der Vertiefung 30 ist eine kreissegmentförmige Öffnung 31 vorgesehen. Durch die Öffnung 31 gelangen die Zutaten aus der Kassette 48 in den Topf 42. Zum Öffnen und Schließen der Öffnung 31 ist ein um den Ring 28 drehbarer Verschluß (Fig. 5) vorgesehen. Zum automatischen Öffnen und Schließen der Öffnung 31 durch Drehen des Verschlusses 33 ist die Antriebseinheit 16 mit vertikal verschiebbarer Antriebsachse vorgesehen (Fig. 2). Zum Betätigen des Verschlusses 33 wird die Antriebsachse in Fig. 2 nach unten verschoben. Bei der Antriebsachse kann es sich ebenfalls um eine teleskopartige Achse handeln. Das untere Ende der Achse greift in an dem Verschluß 33 vorgesehene Zähne 34 ein. Durch Drehen der Antriebsachse wird der Verschluß 33 um den Ring 28 gedreht. Befindet sich der Verschluß 33 in der mit "E" (Fig. 4) bezeichneten Stellung, so ist die Öffnung 31 offen. In der mit "F" bezeichneten Stellung befindet sich der Verschluß 33 über der Öffnung 31 und verschließt diese.

In dem Ring 28 ist eine kreisförmige Durchgangsöffnung 27 vorgesehen, durch die die Betriebsachse 17 (Fig. 2), mit der das Rührwerk 44 betrieben wird, hindurchgeführt werden kann. An der Unterseite des Kühlkammerbodens 4a sind Dunstlenkbleche 32 vorgesehen. Durch die Dunstlenkbleche 32 wird der aus dem Topf 42 (Fig. 2) austretende Dunst in Richtung des Dunstabführkanals 9 gelenkt.

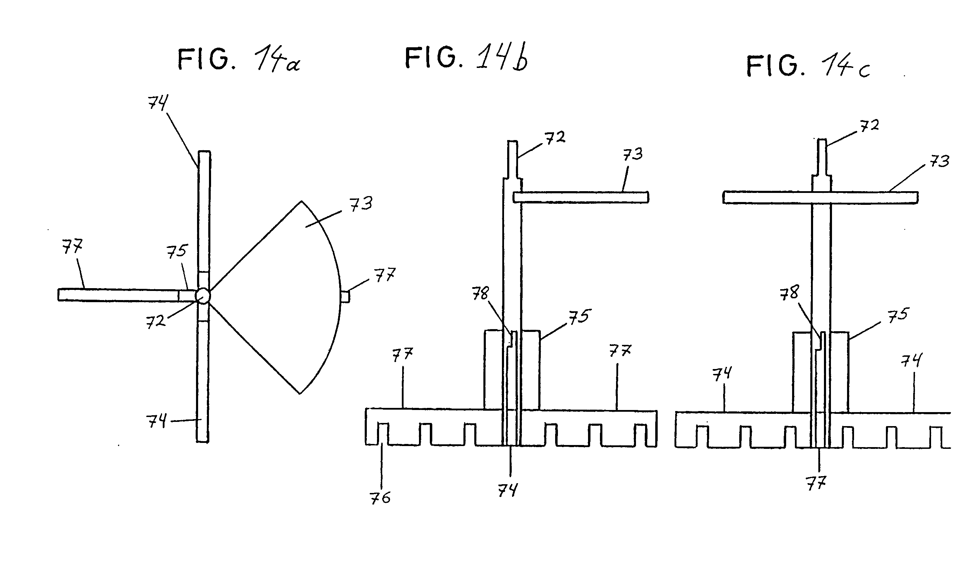

Der Topf 42 ist mit einem Deckel 36 (Fig. 7) verschlossen. Der Deckel 36 weist einen Handgriff 37 auf. Gegenüber der in dem Kammerboden 4a vorgesehenen Öffnung 31 (Fig. 4) weist der Deckel 36 eine ebenfalls kreissegmentförmige Öffnung 40 auf. Die Zutaten gelangen somit aus der Kassette 48 durch die Öffnung 31 des Kammerbodens 4a und sodann durch die Öffnung 40 des Deckels 36 in den Topf 42. Ferner weist der Deckel 36 mittig eine Öffnung 39 auf, die mit der Öffnung 27 in dem Kammerboden 4a (Fig. 4) fluchtet. Durch die Öffnung 39 wird die Betriebsachse zum Antreiben des Rührwerks 44 in den Topf 42 geführt, indem sie mit dem Rührwerk automatisch gekoppelt wird.

Auf der Oberseite des Deckels sind Dunstlenkbleche 38 vorgesehen, die gegenüber den Dunstlenkblechen 32, die an der Unterseite des Kammerbodens 4a angeordnet sind (Fig. 6). Bei den Dunstlenkblechen 32,38 handelt es sich um V-förmig angeordnete Kunststoffstege. Durch das Vorsehen einander gegenüberliegender Dunstlenkbleche 32 und 38 wird der Bereich zwischen dem Deckel 36 und dem Kammerboden 4a dicht verschlossen, so dass aus dem Topf 42 austretender Dunst stets in Richtung des Dunstabführkanals 9 umlenkt wird. Am Umfang des kreisrunden Deckels 36 ist ein Dichtgummi 41 vorgesehen, durch den der Deckel 36 dichtend mit dem Topf 42 abschließt.

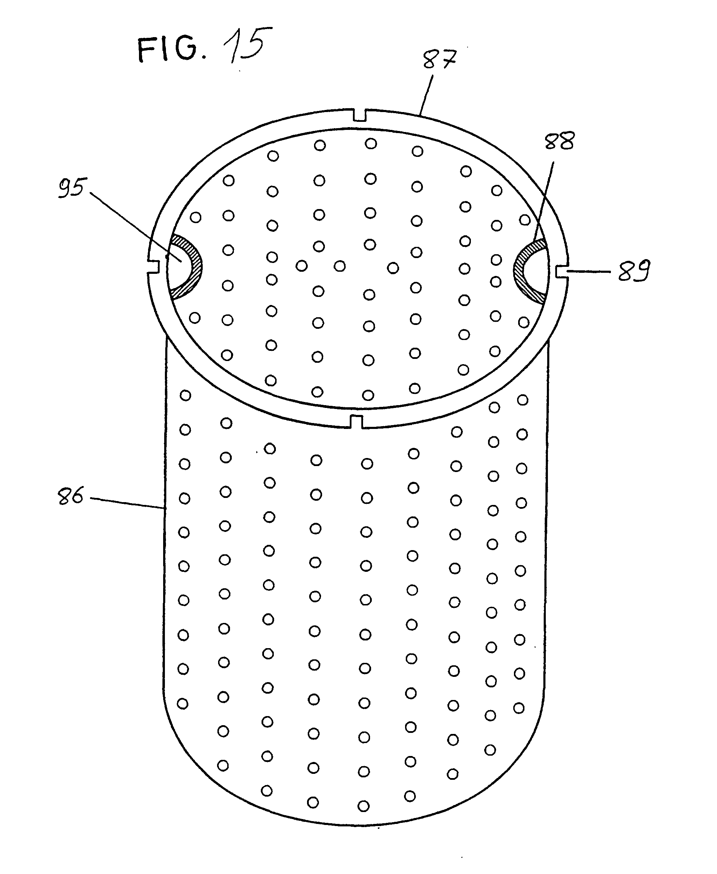

Das Rührwerk 44 (Fig. 8) weist an einem senkrechten Steg im unteren Bereich horizontal angeordnete Rührstangen 45 zum Umrühren der Speisen auf. Die Stangen 45 sind nahe des Bodens des Topfs 42 angeordnet, so dass ein Anbrennen der Speisen verhindert ist. Es sind vier im rechten Winkel zueinander angeordnete Stangen 45 vorgesehen. Oberhalb der Stangen 45 sind weitere Rührstangen 46 an dem zentralen Stab des Rührwerks 44 vorgesehen. Durch die Rührstangen 46 werden die in dem Topf 42 befindlichen Zutaten gemischt. Am oberen Ende des Rührwerks 44 ist ein Ansatz 47 vorgesehen, der in Draufsicht kreissegmentförmig ist. Der Ansatz 47 ist etwas größer als die in dem Deckel vorgesehene Öffnung 40 (Fig. 7). Wenn sich das Rührwerk 44 in einer Stellung befindet, in der der Ansatz 47 unter der Deckelöffnung 40 angeordnet ist, dient der Ansatz 44 zum Verschließen der Deckelöffnung 40. Um diese dicht zu verschließen, kann das Rührwerk geringfügig angehoben werden, so dass die Oberseite des Ansatzes 47 an der Unterseite des Deckels 36 abdichtend anliegt.

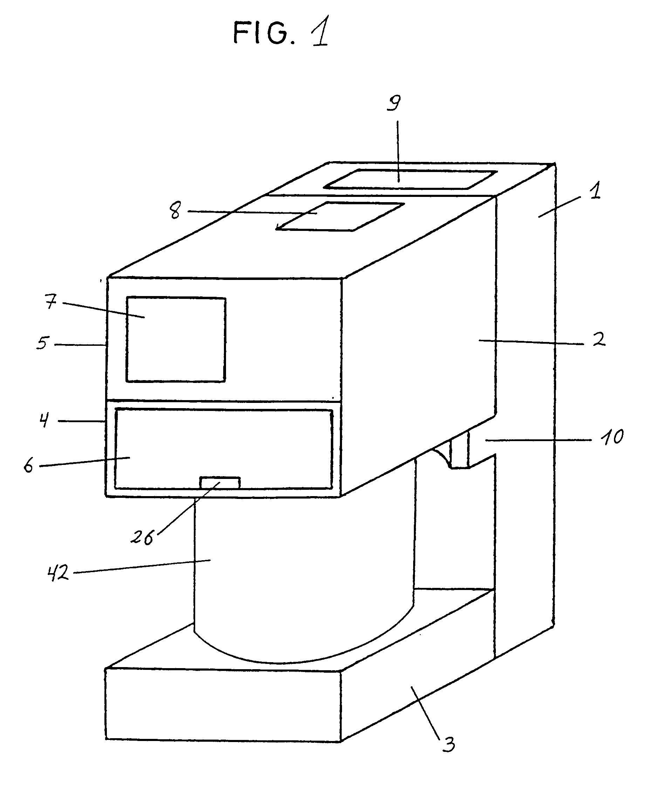

Die in der Kühlkammer 4 vorgesehene Kassette 48 ist über die in der Kiste 2 vorgesehene Klappe 6 (Fig. 1) austauschbar. Die Kassette 48 weist einen kreisringförmigen Querschnitt auf. Dieser ist durch Zwischenwände in mehrere Fächer 50,51 unterteilt. Hierbei sind die Innenfächer 51 kreissegmentförmig und die äußeren Fächer 50 ringsegmentförmig. In den einzelnen Fächern 50,51 können unterschiedliche Zutaten für die zuzubereitende Speise untergebracht werden. Dies erfolgt vorzugsweise in einem automatischen Prozeß, so dass die fertig befüllten Kassetten 48 beispielsweise im Supermarkt gekauft werden können. Die Kassette 48 ist mit einem Deckel 49 verschlossen. Die äußeren Fächer 50 sind am Boden mit einer Folie 53 verschlossen. Um die Folie 53 an der Kassette befestigen zu können, sind im unteren Bereich der Fächer 50 Verbreiterungen 55 vorgesehen, an denen die Folie 53 beispielsweise festgeklebt ist. Bei der Folie 53 handelt es sich vorzugsweise um eine Alufolie, um die durch den Topf 42 entwickelte Hitze gegenüber den Zutaten abzuschirmen. Jede einzelne Folie 53 ist mit einem Ansatz 54 versehen (Fig. 11). Der Ansatz 54 dient zum Öffnen des Fachs 50, indem die Folie 53 entfernt wird. Dies erfolgt ebenfalls automatisch. Hierzu weist der in dem Kammerboden 4a vorgesehene Verschluß 33 (Fig. 5) Öffner 35 auf. Durch Drehen des Verschlusses 33, durch das gleichzeitig die Öffnung 33 in dem Kammerboden 4a freigegeben wird, greifen die Öffner 35 an dem Ansatz 54 an und bewegen die Folie 53 in Richtung einer in der Kassette 48 vorgesehenen Vertiefung 57. Beim Öffnen wird die Folie 53 in die Vertiefung 57 geschoben.

Die Innenfächer 51 sind im oberen und unteren Bereich mit Folien verschlossen. Diese Folien werden durch einen Stößel 18 (Fig. 2) geöffnet, indem der Stößel 18 durch den Hydraulikmotor 29 in Fig. 2 vertikal nach unten bewegt wird. Die Innenfächer 51 weisen im unteren Bereich Ansätze 56 auf, durch die ein gezieltes Austreten der in den Innenfächern 51 vorhandenen Zutaten gewährleistet ist. Dies ist insbesondere dann erforderlich, wenn in den Innenfächern 51 flüssige Zutaten vorhanden sind.

Zum Hindurchführen der Betriebsachse 17, mit der das Rührwerk 44 angetrieben wird (Fig. 2), weist die Kassette 48 mittig einen durchgehenden Kanal 52 auf.

Da die einzelnen Fächer 50,51 nur entleert werden können, wenn sie sich über der in dem Kammerboden 4a vorgesehenen. Öffnung 31 (Fig. 4) befinden, muß die Kassette gedreht werden. Hierzu weist die Kassette einen Ring 58 auf, an dem eine entsprechende Antriebseinheit angreift. Bei dem Ring 58 kann es sich beispielsweise um einen Zahnring handeln, in den ein Zahnrad einer Antriebseinheit eingreift. Die einzelnen Fächer 50,51 werden in zeitlichen Abständen zueinander geleert. Hierdurch können zu den für die Speisenzubereitung erforderlichen exakten Zeitpunkten die Zutaten aus den Fächern 50,51 dem Topf 42 zugeführt werden.

Mit Hilfe eines Fleischrosts kann in dem Topf 42 auch Fleisch oder andere Speisen gebraten werden. Hierzu weist der Fleischrost einen Rostboden 79 auf, der durch mehrere im wesentlichen senkrecht zum Rostboden 79 angeordnete Stege 71 in Abschnitte 70 unterteilt ist. Jeder Abschnitt 70 ist in dem dargestellten Ausführungsbeispiel ein Viertel des gesamten kreisförmigen Rostbodens 79. Zwischen den einzelnen Abschnitten 70 sind Ausnehmungen 80 vorgesehen. Die Ausnehmung 80 ist somit kreuzförmig. Durch einen äußeren Ring des Rostbodens 79 und die Stege 71 sind die einzelnen Gitterstäbe des Rostbodens 79 zusammengehalten. Der Rostboden 79 ist über zwei senkrecht zum Rostboden 79 angeordnete Stege mit einem parallel zum Rostboden verlaufenden Ring 67 verbunden. Der flache Ring 67 weist vier gleichmäßig am Umfang verteilte Öffnungen 78 auf.

Die Stege 71 können sich entweder über den gesamten Radius des Rostbodens 79 erstrecken oder aus einzelnen Zähnen bestehen.

Zum Wenden des auf einem Abschnitt 70 des Rostbodens 79 angeordneten Fleisches ist ein Fleischwender (Fign. 14a-14c) vorgesehen. Der Fleischwender 72 weist an seinem oberen Ende einen Anschluß, beispielsweise einen Vierkant, auf, der mit der Betriebsachse 17 zum Drehen des Fleischwenders 72 verbindbar ist. Am unteren Ende des Fleischwenders 72 sind horizontale Schenkel 74,77 befestigt. Zum Wenden des Fleisches sind die Schenkel 74,77 in einem geringen Abstand zu dem Rostboden 79 angeordnet, so dass sie den Rostboden 79 nicht berühren.

Durch Drehen des Fleischwenders 72 wird ein auf dem Abschnitt 70 liegendes Fleisch von dem Schenkel 74 bzw. 77 gegen einen den Abschnitt 70 begrenzenden Schenkel 71 gedrückt. Hierbei wird das Fleisch an dem Schenkel 74 bzw. 77 angehoben und durch Weiterdrehen des Fleischwenders 72 über den Steg 71 gewendet. Das Fleischstück gelangt somit in gewendetem Zustand in einen benachbarten Abschnitt 70.

Die Schenkel 74,77 weisen Ausnehmungen 76 auf, die mit den Zähnen 71 korrespondieren. Der Abstand der Ausnehmungen 76 zur Außenkante der Schenkel 74 ist größer als der Abstand der Ausnehmungen 76 zur Außenkante 77. Dadurch kann der Fleischwender, bevor Fleisch auf die einzelnen Rostbodenabschnitte 70 gelegt wird, durch Zurückdrehen in eine Ausgangsstellung gebracht werden. Der Fleischwender kann so weit entgegen der Wende-Drehrichtung zurückgedreht werden, bis die Schenkel an den Zähnen 71 des Rostbodens anstoßen.

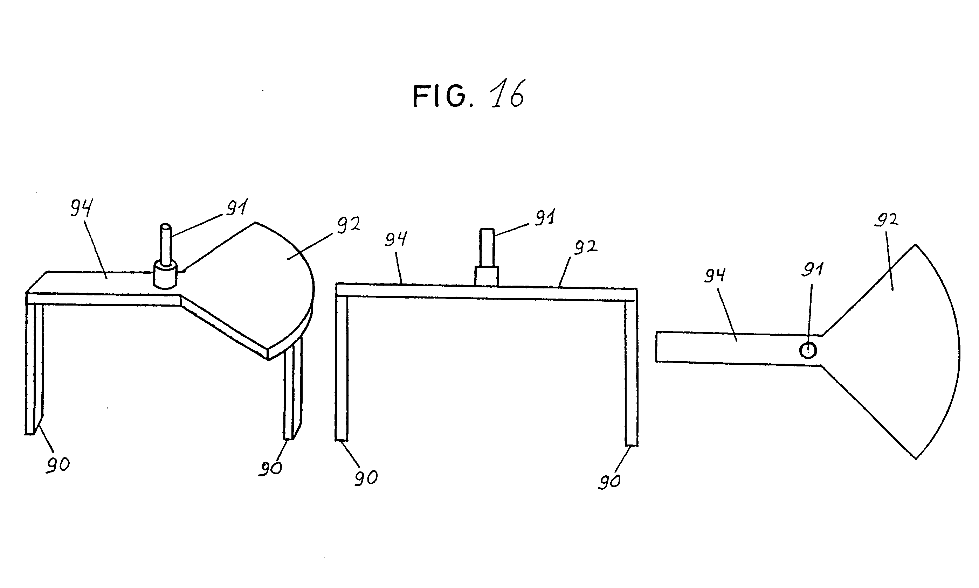

Sobald das Fleisch auf beiden Seiten fertig gebraten ist, wird der Fleischrost angehoben. Hierzu greifen in die Öffnungen 68 der Ringe 67, die als Führungselemente dienen, Schienen 64 (Fig. 12) ein, die ebenfalls als Führungselemente dienen. Die Schienen 64 sind an der Innenwand des Topfes 72 im oberen Bereich des Topfes angeordnet. Es handelt sich um gekrümmte schrägstehende Schienen. Durch Drehen des Fleischrostes wandert der Fleischrost entlang der Schienen 64 nach oben, da ein freies Drehen des Fleischrostes durch das Zusammenwirken der Schienen 64 mit den Öffnungen 68 verhindert ist. Die Drehung des Rostes wird durch den Fleischwender 72 bewirkt. Hierzu wird der Fleischwender 72 nach unten in Richtung des Rostbodens 79 verschoben, so dass die Schenkel 74,77 in die Ausnehmungen 80 eindringen. Durch in der Schenkelebene vorgesehene Ansätze 75 des Fleischwenders 72 wird die Drehung des Fleischrosts bewirkt. Da der Fleischrost durch die Drehung nach oben wandert, sind die Ansätze 75 höher als die Schenkel 74,77. Dadurch ist ein Drehen des Rostes sichergestellt, auch wenn der Rost bereits vom Boden abgehoben ist und sich oberhalb der Schenkel 74,77 befindet.

Sobald der Rost am Ende der Schienen 64 angelangt ist, greifen die Schienen 64 nicht mehr in die Öffnungen 68. Der Rost wird noch um ein Stück weitergedreht, so dass die Öffnungen 68 nicht mehr oberhalb der Enden der Schienen 64 angeordnet sind. Die Schienenenden dienen hierbei als Auflage 65, auf der der Ring 67 des Fleischrosts aufliegt. In dieser Lage ist der Rostboden 79 gegenüber dem Topfboden angehoben.

Der Fleischwender 72 weist entsprechend dem in Fig. 8 dargestellten Rührwerk einen Ansatz 73 zum Verschließen der Deckelöffnung 40 (Fig. 7) auf.

Ferner kann in den Topf 42 ein Sieb 86 (Fig. 15) eingesetzt werden. In dem Sieb 86 können beispielsweise Speisen in Wasser gekocht werden. Das Sieb 86 weist zum Einhängen in den Topf 42 einen Ring 87 auf. An dem Ring 87 sind halbkreisförmige, nach innen gerichtete Ansätze 88 befestigt. Die Ansätze 88 liegen einander gegenüber und bilden jeweils eine Öffnung 95. In die Öffnung 95 kann ein Rührwerk 91 (Fig. 16) eingreifen. Hierzu weist das Rührwerk zwei im wesentlichen vertikale Schenkel 90 auf, die über Querstege 92,94 mit dem Rührwerk 91 verbunden sind. Das Rührwerk 91 kann über die Betriebsachse 17 (Fig. 2) angetrieben werden. Durch ein Hin- und Herdrehen des Siebes 86 werden die beispielsweise in dem Sieb vorhandenen Teigwaren gemischt. Der Quersteg 92 des Rührwerks 91 ist entsprechend der in den Fig. 8 und 14 dargestellten Rührwerke als kreissegmentförmiger Ansatz ausgebildet, durch den die in dem Deckel 36 (Fig. 7) vorhandene Öffnung 40 verschließbar ist.

## Patentansprüche

1. Gerät zur automatischen Essenszubereitung, mit
einer Erwärmungsplatte (3) zum Erwärmen eines Topfs (42),
einer über der Erwärmungsplatte (3) angeordneten Kammer (4) zur Aufnahme einer austauschbaren Kassette (48), in der Zutaten für die Essenszubereitung enthalten sind, und
einer in der Kassette (48) vorgesehenen Öffnung zum Entladen der Zutaten in den Topf (42),
wobei die Öffnung mit einem Verschluß (53) verschlossen ist, der von einer an der Kammer (4) vorgesehenen Antriebseinheit (16) betätigbar ist.

2. Gerät nach Anspruch 1, **dadurch gekennzeichnet, dass** die Antriebseinheit (16) mindestens ein Aufreißorgan zum Aufreißen einer die Kassette verschließenden Folie (53) aufweist.

3. Gerät nach Anspruch 1 oder 2, **dadurch gekennzeichnet, dass** in einem Kühlkammerboden (4a) eine mit einem Verschluß (33) versehene Öffnung (31) vorgesehen ist, die durch die Antriebseinheit (16) betätigbar ist.

4. Gerät nach Anspruch 3, **dadurch gekennzeichnet, dass** an dem Verschluß (33) ein Öffner (35) zum Öffnen des Verschlusses (53) der Kassette (48) vorgesehen ist.

5. Gerät nach einem der Ansprüche 1-4, **dadurch gekennzeichnet, dass** die Antriebseinheit über der Kammer (4) angeordnet ist und eine verschiebbare Antriebswelle (16) aufweist, die zum Betätigen des Verschlusses (33) durch die Kammer (4) schiebbar ist.

6. Gerät nach einem der Ansprüche 1-5, **dadurch gekennzeichnet, dass** die Kassette (48) mehrere Fächer (50,51) für unterschiedliche Zutaten aufweist, die mittels einer Verstellvorrichtung automatisch über der Öffnung (31) in dem Kammerboden (4a) anordenbar sind.

7. Gerät nach einem der Ansprüche 1-6, **dadurch gekennzeichnet, dass** ein automatisch betätigbarer Stößel (18) zum Öffnen von in der Kassette (48) vorgesehenen Fächern (51) vorgesehen ist.

8. Gerät nach einem der Ansprüche 1-7, **dadurch gekennzeichnet, dass** in dem Topf (42) ein Rührwerk (44) vorgesehen ist, das über eine Betriebsachse (17) mit einer Antriebseinheit verbindbar ist.

9. Gerät nach einem der Ansprüche 1-8, **gekennzeichnet durch** einen die Kammer (4) tragenden Ständer (1), in dem zusätzlich ein Dunstabführkanal (9) vorgesehen ist.

10. Gerät nach Anspruch 9, **dadurch gekennzeichnet, dass** an dem Deckel (36) und/oder dem Kammerboden (4a) Dunstlenkbleche (38,32) zum Umlenken von aus dem Topf (42) austretendem Dunst in Richtung des Dunstabführkanals (9) vorgesehen sind.

11. Gerät nach einem der Ansprüche 1-10, **dadurch gekennzeichnet, dass** an dem Ständer (1) ein Wasseranschluß (13) zum Zuführen von Wasser in den Topf (42) über die Deckelöffnung (40) vorgesehen ist.

12. Gerät nach einem der Ansprüche 1-11, **dadurch gekennzeichnet, dass** in den Topf ein Fleischrost zum Braten von Fleisch einsetzbar ist, mit
einem Rostboden (79), der durch im wesentlichen senkrecht zum Rostboden (79) angeordnete Stege (71) in mehrere Abschnitte (70) unterteilt ist, und
einem als Fleischwender (72) ausgebildeten Rührwerk mit horizontalen Schenkeln (74,77), wobei durch Drehen des Fleischwenders (72) das Fleisch von den Schenkeln (74,77) gegen die Stege (71) des Rostbodens (79) gedrückt wird und über die Stege (71) in den angrenzenden Abschnitt (70) gewendet wird.

13. Gerät nach Anspruch 12, **dadurch gekennzeichnet, dass** der Fleischwender (72) Ansätze (75) aufweist, die zum Drehen des Fleischrosts in Ausnehmungen (80) des Fleischrosts (79) eingreifen und der Fleischrost (79) mit Führungselementen (68) versehen ist, die mit an der Topfinnenwand vorgesehenen Führungselementen (64) zusammenwirken, wobei der Fleischrost durch die Drehung entlang der Führungselemente (64) angehoben wird.

14. Kassette zur Bereitstellung von Zutaten für ein Gerät nach einem der Ansprüche 1-13, mit
einem mehrere Fächer (50,51) für unterschiedliche Zutaten aufweisenden Körper (48) und
die Fachböden der einzelnen Fächer (50,51)verschließenden Folien (53).

15. Kassette nach Anspruch 14, **dadurch gekennzeichnet, dass** der Körper (48) im Querschnitt kreiszylinderförmig ist und die Fächer (50,51) kreis- und/oder ringsegmentförmig sind.

16. Kassette nach Anspruch 14 oder 15, **dadurch gekennzeichnet, dass** die Folien (53) mit einem Ansatz (54) versehen sind, der zum Öffnen des entsprechenden Fachs (50,51) mit dem Öffner (35) des Verschlusses (33) zusammenwirkt.

17. Kassette nach einem der Ansprüche 14-16, **dadurch gekennzeichnet, dass** zumindest einem Fach (50) eine Ausnehmung (57) zur Aufnahme der Folie (53) beim Öffnen des Fachs (50) zugeordnet ist.

## Claims

1. Device for automatically preparing food, comprising
a hot plate (3) for heating a pot (42),
a chamber (4) arranged above the hot plate (3) for receiving an exchangeable cartridge (48) containing the ingredients for the preparation of food, and
an opening provided in the cartridge (48) for filling the ingredients into the pot (42),
wherein the opening is closed with a closure (53) which can be actuated by a drive unit (16) provided at the chamber (4).

2. Device according to claim 1, **characterized in that** the drive unit (16) comprises at least one tear-open element for tearing open a foil (53) closing the cartridge.

3. Device according to claim 1 or 2, **characterized in that** a cooling chamber bottom (4a) has an opening (31) comprising a closure (33), said closure (33) being adapted to be actuated by the drive unit (16).

4. Device according to claim 3, **characterized in that** the closure (33) comprises an opener (35) for opening the closure (53) of the cartridge (48).

5. Device according to one of claims 1-4, **characterized in that** the drive unit is arranged above the chamber (4) and comprises a displaceable drive shaft (16) which is shiftable through the chamber (4) for the purpose of actuating the closure (33).

6. Device according to one of claims 1-5, **characterized in that** the cartridge (48) comprises a plurality of compartments (50,51) for different ingredients, said compartments being adapted to be automatically arranged above the opening (31) in the chamber bottom (4a) by a positioning means.

7. Device according to one of claims 1-6, **characterized in that** a plunger (18) adapted to be automatically actuated for opening the compartments (51) in the cartridge (48) is provided.

8. Device according to one of claims 1-7, **characterized in that** in the pot (42) a mixer (44) is provided, the mixer (44) being connectable via an operating spindle (17) with a drive unit.

9. Device according to one of claims 1-8, **characterized by** a stand (1) carrying the chamber (4), the stand (1) comprising a vapour discharge duct (9).

10. Device according to claim 9, **characterized in that** the lid (36) and/or the chamber bottom (4a) comprise vapour guide plates (38,32) for guiding vapour leaving the pot (42) towards the vapour discharge duct (9).

11. Device according to one of claims 1-10, **characterized in that** the stand (1) comprises a water connection (13) for supplying water via the opening (40) in the lid into the pot (42).

12. Device according to one of claims 1-11, **characterized in that** a meat roaster for roasting meat is insertable in the pot, the meat roaster comprising
a roaster bottom (79) divided into a plurality of sections (70) by fins (71) arranged essentially vertical to the roaster bottom (79), and
a mixer configured as a meat turning means (72) comprising horizontal legs (74,77), wherein, by rotation of the meat turning means (72), the meat is pressed by the legs (74,77) against the fins (71) of the roaster bottom (79) and is turned over the fins (71) into the neighboring section (70).

13. Device according to claim 12, **characterized in that** the meat turning means (72) comprises projections (75) for rotating the meat roaster, the projections (75) mesh with recesses (80) of the meat roaster (79), and the meat roaster (79) is provided with guide elements (68) cooperating with guide elements (64) provided on the inner wall of the pot, wherein the meat roaster is lifted, by the rotation, along the guide elements (64).

14. Cartridge for supplying ingredients to a device according to one of claims 1-13, comprising
a body (48) comprising a plurality of compartments (50,51) for different ingredients, and
foils (53) closing the compartment bottoms of the individual compartments (50,51).

15. Cartridge according to claim 14, **characterized in that** the body (48) has a circular-cylindrical cross-section, and the compartments (50,51) are of circular- and/or ring-segmental configuration.

16. Cartridge according to claim 14 or 15, **characterized in that** the foils (53) are provided with a projection (54) that cooperates with the opener (35) of the closure (33) for the purpose of opening the corresponding compartment (50,51).

17. Cartridge according to one of claims 14-16, **characterized in that** a recess (57), which receives the foil (53) when the compartment (50) is opened, is assigned to at least one compartment (50).

## Revendications

1. Appareil pour la préparation automatique d'un mets, comprenant
une plaque de chauffage (3) pour faire chauffer une marmite (42),
une chambre (4) disposée au-dessus de la plaque de chauffage (3) pour recevoir une cassette (48) interchangeable, dans laquelle sont contenus des ingrédients pour préparer un mets, et
une ouverture prévue dans la cassette (48) pour décharger les ingrédients dans la marmite (42),
l'ouverture étant fermée par un couvercle (53) pouvant être actionné par une unité motrice (16) prévue au niveau de la chambre (4).

2. Appareil selon la revendication 1, **caractérisé en ce que** l'unité motrice (16) présente au moins un organe d'arrachage pour arracher un film (53) obturant la cassette.

3. Appareil selon la revendication 1 ou 2, **caractérisé en ce que**, dans un fond de chambre froide (4a), il est prévu une ouverture (31) pourvue d'un couvercle (33), et pouvant être actionnée par l'unité motrice (16).

4. Appareil selon la revendication 3, **caractérisé en ce qu'**un dispositif d'ouverture (35) est prévu sur le couvercle (33) pour ouvrir le couvercle (53) de la cassette (48).

5. Appareil selon l'une des revendications 1-4, **caractérisé en ce que** l'unité motrice est disposée au-dessus de la chambre (4) et présente un arbre moteur (16) mobile qui, pour actionner le couvercle (33), peut être poussé à travers la chambre (4).

6. Appareil selon l'une des revendications 1-5, **caractérisé en ce que** la cassette (48) présente plusieurs compartiments (50, 51) pour différents ingrédients, qui peuvent être disposés automatiquement au-dessus de l'ouverture (31) du fond de chambre (4a) à l'aide d'un dispositif de positionnement.

7. Appareil selon l'une des revendications 1-6, **caractérisé en ce qu'**un poussoir (18) à actionnement automatique est prévu pour ouvrir des compartiments (51) prévus dans la cassette (48).

8. Appareil selon l'une des revendications 1-7, **caractérisé en ce qu'**il est prévu, dans la marmite (42), un agitateur (44) pouvant être relié à une unité motrice par l'intermédiaire d'un arbre de fonctionnement(17).

9. Appareil selon l'une des revendications 1-8, **caractérisé par** un support (1) portant la chambre (4), dans lequel est également prévu un canal d'évacuation de vapeur (9).

10. Appareil selon la revendication 9, **caractérisé en ce que** des tôles de guidage de vapeur (38, 32) sont prévues sur le couvercle (36) et/ou le fond de chambre (4a), pour guider la vapeur sortant de la marmite (42) en direction du canal d'évacuation de vapeur (9).

11. Appareil selon l'une des revendications 1-10, **caractérisé en ce qu'**un branchement d'eau (13) est prévu sur le support (1) pour amener de l'eau dans la marmite (42) par l'intermédiaire de l'ouverture de couvercle (40).

12. Appareil selon l'une des revendications 1-11, **caractérisé en ce que** l'on peut insérer dans la marmite une grille à viande pour rôtir une viande, comprenant
un fond de grille (79) qui est divisé en plusieurs sections (70) par des nervures (71) disposées pour l'essentiel perpendiculairement au fond de grille (79), et
un agitateur à branches horizontales (74, 77) configuré comme une broche à viande, la viande, suite à la rotation de la broche à viande (72), étant poussée par les branches (74, 77) contre les nervures (71) du fond de grille (79) et retournée par l'intermédiaire des nervures (71) dans la section (70) adjacente.

13. Appareil selon la revendication 12, **caractérisé en ce que** la broche à viande (72) présente des saillies (75) qui, pour tourner la grille à viande, s'engrènent dans des évidements (80) de la grille à viande (79), et **en ce que** la grille à viande (79) est munie d'éléments de guidage (68) qui coopèrent avec des éléments de guidage (64) prévus sur la paroi intérieure de la marmite, la grille à viande étant soulevée par la rotation le long des éléments de guidage (64).

14. Cassette pour la présentation d'ingrédients destinée à un appareil selon l'une des revendications 1-13, comprenant
un corps (48) présentant plusieurs compartiments (50, 51) pour différents ingrédients, et
des films (53) obturant les fonds de compartiment des différents compartiments (50, 51).

15. Cassette selon la revendication 14, **caractérisée en ce que** la section transversale du corps (48) présente une forme cylindrique circulaire et **en ce que** les compartiments (50, 51) présentent une forme de segment de cercle et/ou de segment d'anneau.

16. Cassette selon la revendication 14 ou 15, **caractérisée en ce que** les films (53) sont pourvus d'un appendice (54) qui, pour ouvrir le compartiment (50, 51) correspondant, coopère avec le dispositif d'ouverture (35) du couvercle (33).

17. Cassette selon l'une des revendications 14-16, **caractérisée en ce qu'**un évidement (57), prévu pour recevoir le film (53) lors de l'ouverture du compartiment (50), est associé à au moins un compartiment (50).
